(19) **Europäisches Patentamt**
**European Patent Office**
**Office européen des brevets**

(11) **EP 1 454 304 B1**

(12) **EUROPEAN PATENT SPECIFICATION**

(45) Date of publication and mention
of the grant of the patent:
**21.03.2018 Bulletin 2018/12**

(21) Application number: **02803356.1**

(22) Date of filing: **04.11.2002**

(51) Int Cl.:
***G07C 9/00*** *(2006.01)*

(86) International application number:
**PCT/EP2002/012353**

(87) International publication number:
**WO 2003/044744 (30.05.2003 Gazette 2003/22)**

(54) **SECURITY METHOD AND SYSTEM**

SICHERHEITSVERFAHREN UND -SYSTEM

PROCÉDÉ ET SYSTÈME DE SÉCURITÉ

(84) Designated Contracting States:
**AT BE BG CH CY CZ DE DK EE ES FI FR GB GR
IE IT LI LU MC NL PT SE SK TR**

(30) Priority: **23.11.2001 EP 01204519
27.11.2001 EP 01204569**

(43) Date of publication of application:
**08.09.2004 Bulletin 2004/37**

(73) Proprietor: **Nederlandse Organisatie voor
toegepast-
natuurwetenschappelijk onderzoek TNO
2595 DA 's-Gravenhage (NL)**

(72) Inventors:
• **GELBORD, Boaz, Simon
NL-1018 VV Amsterdam (NL)**
• **ROELOFSEN, Gerrit
NL-2331 AH Leiden (NL)**

(74) Representative: **V.O.
P.O. Box 87930
2508 DH Den Haag (NL)**

(56) References cited:
**EP-A- 0 622 780      WO-A-00/14716
WO-A-00/22581      WO-A-99/56250
WO-A2-01/20422      US-A- 5 712 912
US-B1- 6 243 695**

**Description**

<u>Field of the Invention</u>

The invention generally relates to access security in computer and telecommunication networks, data systems, etc. , using security codes like PINs etc. , or by means of biometric data like fingerprints, facial scans, retina scans, etc.

<u>Background of the Invention</u>

The use of biometric methods for the identification of persons is growing and so the number of biometric methods used for that purpose does. In particular there might be significant advantages in many applications, including automatic teller machines (ATM's), home banking and e-commerce applications, to replace alphanumerical security codes by biometric items, since a user's biometric characteristic is always available, while a numerical security code might be forgotten or be obtained by a third party.

Though the techniques for biometric identification have matured, there are some problems. A major problem is the unwillingness of people to provide their personal biometric data for identification purposes. One reason for this is that people fear that a receiver or verifier of biometric data might misuse it. The second reason is the negative feelings in general associated with providing personal biometric data.

WO 00/14716 discloses a method of generating a key from the person's biometrics data. Biometric data is entered twice. The first instance is used to define standard biometric data that can be output as a security code. The second instance is used to retrieve the first instance, using an associative memory in the form of a neural net. In this way biometric data can be output without suffering from variations between different instances of captured biometric data.

WO00/22581 discloses calculating of an identification code (PIN) on the basis of detected biometric characteristics. This calculation is made more robust against position shifts in fingerprints. Two parts of the fingerprint a sensed. The PIN code is calculated from the first part.

The second part is used to determine the position and orientation of the captured first part on the finger.

<u>Summary of the Invention</u>

A method according to claim 1 and a system according to claim 8 are provided.

For entering a secured system, in most cases a not-secret user identifier (e. g. login name, account number) has to be entered (e. g. manually or by means of an ID card), to be followed by a secret security code (e. g. password, PIN code).

It is observed that in most cases there is no real need to have security codes which are absolutely unique over all other security codes. The uniqueness in fact is formed by the combination of each not-secret but certainly unique user identifier plus the *secret* but not pertinently unique security code.

One aspect of the present invention is to generate a security code for a user, entering a secure system or application, based on the users' (unique) biometric characteristics.

According to the invention, the security codes generated are certainly secret but need not to be absolutely unique for all users. This feature prevents that each individual security code could be linked back to one individual person, which situation is unwanted. In such a way the privacy and psychological problems for the use of biometric identification could be taken away. Instead of linking back from the security code to one user, in this case only a link could be made from the relevant security code to a *number of* individual users, each of them applying the same security code, however in combination with different, unique user identifiers.

<u>Brief Description of the Drawings</u>

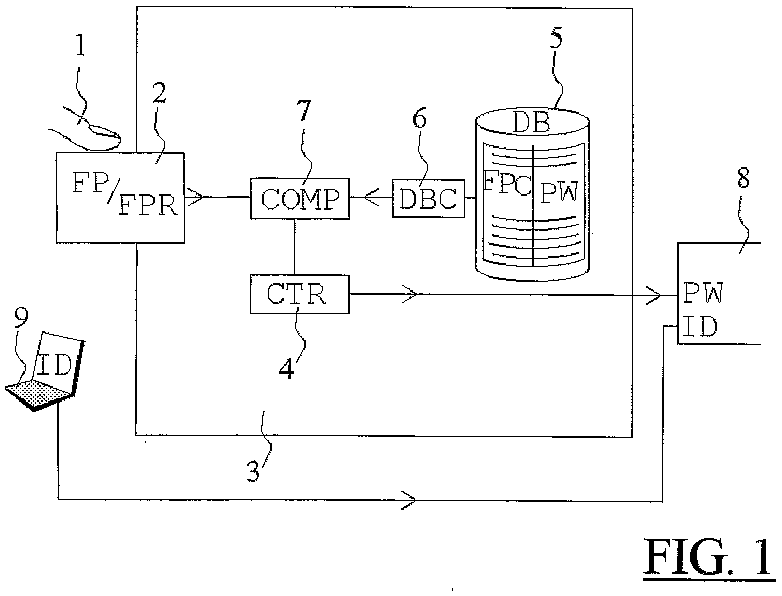

Figure 1 shows schematically the embodiment of a system which is fit for execution of the method as depicted above.

<u>Detailed Description of the Drawings</u>

In figure 1 a user's finger 1 is brought into contact with a fingerprint recorder 2, in which the entered fingerprint (FP) is converted into an digitally processable fingerprint representation (FPR) which is entered into a module 3, fit for converting the fingerprint representation into a security code or "password" (PW), which might be entered in a e. g. computer system 8 having secure access facilities.

Firstly, the user may enter, via e. g. a data terminal, PC or card terminal 9, his/her user identifier (ID), which is input in system 8. Normally the ID is unique for the user or for a user group he/she belongs to, while normally the user ID is not-secret.

Module 3 serves for generating and outputting a secret security code or password after the user has input his/her user ID.

Module 3 comprises a control module (CTR) 4, a database (DB) 5, a database controller (DBC) and a matching or comparing module (COMP) 7.

The database 5 contains a set of (e. g. 10,000) classes of fingerprint representations-having a format which is compatible (comparable, matchable) with the format of the input fingerprint representations (FPR) -comprising the whole scala of different fingerprints representations resulting from fingerprints originated by all kinds of users 1, via module 2. Each stored fingerprint representation class (FPC$_x$) is linked to one stored security code (PW$_x$). All security codes have to be kept secret.

After a fingerprint has been entered via module 2, under control of control module 4 the fingerprint representation, output by module 2, is compared (matched), by module 7, with all fingerprint representation classes stored in database 5. Module 7 matches the FPCs with the user's FPR using one of the matching algorithms which nowadays are in use in modern fingerprint recognizing systems.

After the matching module 7 finds one fingerprint representation class (FPC$_y$) which matches best with the entered fingerprint representation (FPR), the database controller outputs the security code (PW$_y$) which is linked to that matching fingerprint representation class (FPCy), which security code (PW$_y$) is output to the secure access means of system 8.

It is noted that there are several methods for classifying and matching fingerprints, as discussed, for instance, in reference [1], in which fingerprints are classified-for sake of recognition-by way of a spatial re-sampling of each fingerprint pattern through concentric circles. The resulting circles are then correlated with those from a known set (comparable with the set stored in database 5) to obtain a collection of the most probable matches. This technique has shown good results when comparing other methods like binary test patterns or synthetic binary fingerprint images.

Further, it is noted that entering fingerprints in the embodiment of figure 1 only is an example of a biometric items which can be used for secure access purposes. Other examples are e. g. retina scanning, face scanning and other biometric data which are user specific. It is stressed that, although these biometric data generally are considered to be unique and therefor susceptible to fear of using, each biometric item will be converted, by module 3, into a *not- unique, secret* security code (PW), which forms, together with the entered user name, which has to be unique for the system 8, a unique *and* secure access couple.

Below, forming the set of fingerprint classes and the matching process is treated in a more mathematical approach. The following notations are used: T denotes a set of 10,000 pre-defined (pseudo-) fingerprints.

F, G, and H denote three transformations, where F maps the set of all real fingerprints to the set S of ail digital images of fingerprints, G maps the set of all digital images of fingerprints to the set T of 10,000 pre-defined (pseudo-) fingerprints, and H maps the set T to the set of all 4-digits pins.

Let there be a metric M defined which defines a distance between any two fingerprints. We do not specify what M is, since there are numerous well-defined metrics that can be used. In one embodiment, M is the metric which measures the Cartesian distance between the n-tuples which measure a set of given fingerprint characteristics, where n is the number of characteristics.

The invention comprises a process of mapping a fingerprint to a given class of fingerprint. A small number of classes (e. g. 10,000) is meant to ensure that with very high probability the same given physical fingerprint will be mapped to the same pre-defined (pseudo-) fingerprint.

Also we note that the set T shall be chosen in such a way so as to maximise the probability that F (an original fingerprint) is always (i. e. at the very time the original fingerprint is taken) mapped to the same pre-defined (pseudo-) fingerprint.

Note that a token may be used to contain all the 10000 pre-defined (pseudo-) fingerprints that comprise T.

The concatenation of the three functions, F, G, and H achieves the assignment of a 4 digit PIN to a real fingerprint. In particular F transforms a real fingerprint to a digital image. G transforms image to one of 10000 pre-defined (pseudo-) fingerprints. H transform a pre-defined (pseudo-) fingerprint to a 4 digit PIN.

There are numerous ways to construct a function F. These are outside the scope of this document.

An example construction of G is as follows : Let S be the set of all digital images of a real fingerprints.

Let us define for each digital image of a fingerprint in the set S a set of characteristics Cl,..., Cn.

These characteristics measure different values of a real fingerprint (e. g. distances and directions). Thus for a given S_1 in S, one can construct the value $C_i (S\_1)$ for any i from 1 to n, and this yields a real numeric value.

In such a way for each S_1 in S, one can associate a real n-tuple C (S_1), which is namely C (S_1) = (Cl (S_1), C_2 (S_1),..., C_n (S_1)).

This in turn defines a distance between any two elements in S, namely :

$$distance\ (S\_1,\ S\_2) = Cartesian\ distance\ (C\ (S\_1),\ C\ (S\_2)).$$

Using this distance, we can define G (S_1) to be that element in t in T for which distance (SI, t) is minimal.

We note that given two elements S_1 and S2 derived from the same original finger, their distance from each other will be comparatively low (in relation to digital prints taken from other fingers). Due to the small size of T (10,000) relative to S, this will ensure that these two elements S_1 and S 2 will always be mapped to the same element in T, provided that T is chosen so that

$$prob\ (G\ (S\_1) \neq G\ (S\_2))$$

is minimised, where S_t and S2 are two elements of S derived from the same actual finger.

This means that the set T must be constructed in such away that all pairs (T 1, T 2) from T have a mutually high distance (i. e. the Cartesian distance (C (T_1), C (T_2)) should be large for all pairs (T_1, T_2) from T).

The set T can be chosen in numerous ways. E. g. methods from error correcting code theory could be applied. We note that the choice of T is also dependent on the choice of the G.

The function H may be constructed in many ways. One of the methods is to define an ordering of the 10,000 (pseudo-) fingerprints T_1, T_2, T_3,..., T_10000 in T based on their Cartesian distance to a fixed value T_f from (so order (T_i) = Cartesian distance (C (T_i), C (T_f)). The PIN values 0000-9999 are then assigned to in the thus defined order. But the PIN values may also be assigned in a random way to the elements of T.

As presented up here, the invention comprises a process of mapping an entered fingerprint to a given class of fingerprint. A relative small number of classes (e. g. 10000) is preferred to ensure that with high probability always the same entered fingerprint will be mapped to the same equivalence class. Hereafter a preferred method is discussed to optimize the set of 10000 classes.

1. An initial, not-optimized set of classes T is made up, comprising classes TI, T2,..., T10000 respectively.

2. A sample set of fingerprint representations is obtained by taking a random sample of fingerprints entered by several users or by using a standards set commercially available : This sample set comprises e. g. 100 samples, denoted by S1, S2,..., S100.

3. A known, commercially available image recognition program may be used, comprising a known matching algorithm. The program's algorithm begins by searching for a match of S1 to one of the classes of set T. Once a match is found, the program continues with searching for a match of S2 to one of the classes T1... T10000, after that with a search to a match of S3 to one the classes etc. etc. In this way each of the samples S1 to S100 is matched to one class from the set of classes T.

4. The process under 3. is executed for a second set of fingerprint representations S1', S2',..., S100'. The process depicted under 3. is carried out: S1', S2',..., SIOO' is matched, by the matching program with the set of fingerprint classes T resulting in each of the samples S'1 to S'100 being matched to one class from the set of classes T.

5. The process under 3. may be carried out another time or still more times.

6. At this stage the set T is assigned an evaluation value e. g. based on number of times that corresponding representations (S1-Si'-S1"-.., S2-S2'-S2"-..., etc.) lead to different matching classes, e. g. the corresponding fingerprint representations S2 and SS2"match with class T32, while representation S2'matches with class T33.

7. Subsequently one or more new class sets T, T', etc. are generated, preferrably by adaptation of the previous set of classes at those points where corresponding fingerprint representations lead to different matching results (e. g. classes T32/33, see up here) to which in the same way evaluation values are assigned; the set having the lowest value is deemed to be the wanted optimized set of classes.

Reference 1. David H. Chang, Fingerprint Recognition Through Circular Sampling, 1999 Center for Imaging Science Rochester Institute of Technology Rochester, NY 14623-5604.

**Claims**

**1.** Method for access control to a secured system (8), the method comprising the steps of

- providing a set of classes of biometric items (FPC), each class being linked to one security code (PW);
- entering a user's biometric item (FP);
- deriving a security code based on a comparison of the user's biometric item (FP) and the set of classes of biometric items (FPC);

wherein

- the secured system (8) has secure access facilities that provide for entry of user identifier (ID) and a secret security code for the user identifier (ID),
- providing a database containing the set of classes of said biometric items, (FPC) the set of classes comprising the whole range of different biometric items resulting from biometric items originated by all kinds of users, and
- providing a link to a security code (PW) for each class in the set of classes, so that the link to the security code links the security code to a number of individual users, that are each enabled to gain access by means of the same security code linked to the class, in combination with a respective different unique user identifier, wherein the security codes are not unique to all users, the method for access control further comprising
- entering the unique user identifier (ID) into the secure system (8);
- generation and output of the security code (PW) by a module (3) wherein the module (3)
- selects one class from the set of classes (FPC) which corresponds most closely to the user's biometric item; and
- outputs the security code (PW) that is linked to the selected class to the secured system (8), so that the same security code linked to the selected class will be output for each of the number of individual users in the selected class.

2. Method according to claim 1, wherein each security code (PW) is a previously generated code, linked to a single one of the set of classes.

3. Method according to claim 1, further comprising converting the user's biometric item into a user's biometric item representation.

4. Method according to claim 2, wherein the biometric items are fingerprints, and the set of classes (FPC) comprises fingerprint representations having a format which is compatible with a format of the user's biometric item representation in that the fingerprint representations in the set of classes (FPC) can be compared and matched with the user's biometric item representation.

5. Method according to claim 4, further comprising matching the user's biometric item representation with the fingerprint representations in the set of classes (FPC).

6. Method according to claim 1, wherein the set of classes (FPC) is generated by

a. making up an initial set of classes;
b. obtaining a number of representation sample sets, each comprising representations of biometric items from a biometric items sample set, each representation representing one biometric item, and each representation sample set comprising unique representations of the respective biometric items;
c. selecting for each representation sample set, for each representation out of that set one class from said set of classes, which class corresponds most closely to that representation;
d. calculating an evaluation value based on the number of times that corresponding representations in different representation sample sets but representing the same biometric item, lead to different class selections;
e. renewing said initial set of classes one or more times, each time an evaluation value being assigned to it according to the previous steps,
f. selecting the set of classes having the lowest evaluation value as the set of classes.

7. Method according to claim 6, wherein said renewing of the set of classes is achieved by adaptation of the previous set of classes at those points where corresponding fingerprint representations lead to different matching results.

8. System for access control to a secured system (8), the system for access control comprising

- storing means comprising a set of classes of biometric items (FPC) and security codes (PW);
- means (2) for recording a user's biometric item (FP),
- means (7) for deriving a security code (PW) based on the user's biometric item and the stored set of classes of biometric items, and

wherein the secured system (8) has secure access facilities that provide for entry of user identifier (ID) and a secret security code for the user identifier (ID),
said storing means comprise a database containing the set of classes of representations of biometric items, the set of classes comprising the whole range of different biometric items resulting from biometric items originated by all kinds of users, each class in the set being linked to one security code, wherein the security codes are not unique to all users, so that the link to the security code links the security code to a number of individual users, that are each enabled to gain access by means of the same security code linked to the class, in combination with a respective different unique user identifier, the system for access control further comprising

- means (9) for entering a unique user identifier (ID) into the secure system (8)
- said means for deriving the security code (PW) being configured to select, from the set of classes of biometric items (FPC) in the storing means (5), one class of biometric items which corresponds most closely to the recorded user's biometric item, and
- means (5,6, 7,4) for outputting the security code that is linked by the database to the selected class to the secured system (8), so that the same security code linked to the selected class will be output for each of the number of individual users in the selected class.

9. System according to claim 8, wherein each security code (PW) is a previously generated code, linked to a single class.

10. System according to any one of claims 8-9, wherein means (2) for recording the user's biometric item (FP) are arranged for converting the user's biometric item into a user's biometric item into a user's biometric item representation.

11. System according to claim 10, wherein the biometric items are fingerprints, the set of classes (FPC) comprises fingerprint representations having a format which is compatible with a format of the user's biometric item representation in that the fingerprint representations in the set of classes (FPC) can be compared and matched with the user's biometric item representation.

12. System according to claim 11, wherein the means (7) for selecting are arranged for matching the user's biometric item representation with the representations of biometric items in the set of classes (FPC).

**Patentansprüche**

1. Verfahren zur Zugangskontrolle zu einem gesicherten System (8), das Verfahren umfassend folgende Schritte:

- Bereitstellen eines Satzes von Klassen biometrischer Elemente (FPC), jede Klasse verknüpft mit einem Sicherheitscode (PW);
- Eingeben eines biometrischen Elements eines Benutzers (FP);
- Ableiten eines Sicherheitscodes, basierend auf einem Vergleich des biometrischen Elements des Benutzers (FP) und des Satzes von Klassen biometrischer Elemente (FPC);

wobei

- das gesicherte System (8) Sicherheitszugangseinrichtungen hat, die für die Eingabe von Benutzeridentifikator (ID) und eines geheimen Sicherheitscodes für den Benutzeridentifikator (ID) sorgen,
- Bereitstellen einer Datenbank, die den Satz von Klassen der biometrischen Elemente (FPC) enthält, der Satz von Klassen umfassend den gesamten Bereich verschiedener biometrischer Elemente, resultierend von biometrischen Elementen, die von allen Arten von Benutzern stammen, und
- Bereitstellen einer Verknüpfung zu einem Sicherheitscode (PW) für jede Klasse in dem Satz von Klassen, sodass die Verknüpfung zu dem Sicherheitscode den Sicherheitscode mit einer Anzahl individueller Benutzer verknüpft, die jeweils ermächtigt sind, Zugang mittels desselben mit der Klasse verknüpften Sicherheitscodes zu erhalten, in Kombination mit einem entsprechenden verschiedenen eindeutigen Benutzeridentifikator, wobei die Sicherheitscodes nicht für alle Benutzer eindeutig sind, das Verfahren zur Zugangskontrolle ferner umfassend
- das Eingeben des eindeutigen Benutzeridentifikators (ID) in das Sicherheitssystem (8);
- das Erzeugen und Ausgeben des Sicherheitscodes (PW) durch ein Modul (3), wobei das Modul (3)
- eine Klasse aus dem Satz von Klassen (FPC) auswählt, der dem biometrischen Element des Benutzers am meisten entspricht; und

- den Sicherheitscode (PW) ausgibt, der mit der ausgewählten Klasse verknüpft ist, zu dem gesicherten System (8), sodass derselbe Sicherheitscode, verknüpft mit der ausgewählten Klasse, für jeden der Anzahl individueller Benutzer in der gewählten Klasse ausgegeben wird.

2. Verfahren nach Anspruch 1, wobei jeder Sicherheitscode (PW) ein zuvor erzeugter Code ist, verknüpft mit einem einzelnen des Satzes von Klassen.

3. Verfahren nach Anspruch 1, ferner umfassend das Konvertieren des biometrischen Elements des Benutzers in eine Darstellung des biometrischen Elements des Benutzers.

4. Verfahren nach Anspruch 2, wobei die biometrischen Elemente Fingerabdrücke sind und der Satz von Klassen (FPC) Fingerabdruckdarstellungen mit einem Format umfasst, das mit einem Format der Darstellung des biometrischen Elements des Benutzers dadurch kompatibel ist, dass die Fingerabdruckdarstellungen in dem Satz von Klassen (FPC) mit der Darstellung des biometrischen Elements des Benutzers verglichen und abgeglichen werden kann.

5. Verfahren nach Anspruch 4, ferner umfassend das Abgleichen der Darstellung des biometrischen Elements des Benutzers mit den Fingerabdruckdarstellungen in dem Satz von Klassen (FPC).

6. Verfahren nach Anspruch 1, wobei der Satz von Klassen (FPC) erzeugt wird durch

a. Einrichten eines anfänglichen Satzes von Klassen;
b. Erhalten einer Anzahl von Darstellungsprobesätzen, jeweils umfassend Darstellungen biometrischer Elemente aus einem Probesatz biometrischer Elemente, von denen jede Darstellung ein biometrisches Element darstellt und jeder Darstellungsprobesatz eindeutige Darstellungen der jeweiligen biometrischen Elemente umfasst;
c. Auswählen, für jeden Darstellungsprobesatz, für jede Darstellung aus diesem Satz einer Klasse aus dem Satz von Klassen, welche Klasse dieser Darstellung am meisten entspricht;
d. Berechnen eines Beurteilungswertes basierend darauf, wie oft entsprechende Darstellungen in verschiedenen Darstellungsprobesätzen, aber darstellend dasselbe biometrische Element, zu verschiedenen Klassenauswahlen führen;
e. ein- oder mehrmaliges Erneuern des anfänglichen Satzes von Klassen, sooft ein Beurteilungswert ihm gemäß den vorhergehenden Schritten ein Beurteilungswert zugeordnet wird,
f. Auswählen des Satzes von Klassen mit dem niedrigsten Beurteilungswert als Satz von Klassen.

7. Verfahren nach Anspruch 6, wobei das Erneuern des Satzes von Klassen durch Anpassen des vorherigen Satzes von Klassen an jenen Punkten, wo entsprechende Fingerabdruckdarstellungen zu verschiedenen übereinstimmenden Ergebnissen führen, erreicht wird.

8. System zur Zugangskontrolle zu einem gesicherten System (8), das System zur Zugangskontrolle umfassend

- Speichermittel, umfassend einen Satz von Klassen biometrischer Elemente (FPC) und Sicherheitscodes (PW);
- Mittel (2) zum Aufzeichnen eines biometrischen Elements eines Benutzers (FP);
- Mittel (7) zum Ableiten eines Sicherheitscodes (PW), basierend auf dem biometrischen Element des Benutzers und dem gespeicherten Satz von Klassen biometrischer Elemente, und

wobei das gesicherte System (8) gesicherte Zugangseinrichtungen hat, die für die Eingabe von Benutzeridentifikator (ID) und eines geheimen Sicherheitscodes für den Benutzeridentifikator (ID) sorgen, welche Speichermittel eine Datenbank umfassen, die den Satz von Klassen von Darstellungen biometrischer Elemente enthalten, der Satz von Klassen umfassend den gesamten Bereich verschiedener biometrischer Elemente, resultierend von biometrischen Elementen, die von allen Arten von Benutzern stammen, jede Klasse in dem Satz verknüpft mit einem Sicherheitscode, wobei die Sicherheitscodes nicht für alle Benutzer eindeutig sind, sodass die Verknüpfung des Sicherheitscodes den Sicherheitscode mit einer Anzahl individueller Benutzer verknüpft, die jeweils ermächtigt sind, Zugang mittels desselben mit der Klasse verknüpften Sicherheitscodes zu erhalten, in Kombination mit einem entsprechenden verschiedenen Benutzeridentifikator, das System zur Zugangskontrolle ferner umfassend

- Mittel (9) zum Eingeben eines eindeutigen Benutzeridentifikators (ID) in das gesicherte System (8)
- welche Mittel zum Ableiten des Sicherheitscodes (PW) konfiguriert sind, um aus dem Satz von Klassen biometrischer Elemente (FPC) in den Speichermitteln (5) eine Klasse von biometrischen Elementen auszuwählen, die dem aufgezeichneten biometrischen Element des Benutzers am meisten entsprechen, und
- Mittel (5,6, 7,4) zum Ausgeben des Sicherheitscodes, der durch die Datenbank mit der ausgewählten Klasse verknüpft ist, an das gesicherte System (8), sodass derselbe Sicherheitscode, verknüpft mit der ausgewählten Klasse, für jeden der Anzahl individueller Benutzer in der ausgewählten Klasse ausgegeben wird.

**9.** System nach Anspruch 8, wobei jeder Sicherheitscode (PW) ein zuvor erzeugter Code, verknüpft mit einer einzelnen Klasse, ist.

**10.** System nach einem der Ansprüche 8-9, wobei Mittel (2) zum Aufzeichnen des biometrischen Elements des Benutzers (FP) angeordnet sind, das biometrische Element des Benutzers in ein biometrisches Element des Benutzers in eine Darstellung des biometrischen Elements des Benutzers zu konvertieren.

**11.** System nach Anspruch 10, wobei die biometrischen Elemente Fingerabdrücke sind, der Satz von Klassen (FPC) Fingerabdruckdarstellungen mit einem Format umfasst, das mit einem Format der Darstellung des biometrischen Elements des Benutzers dadurch kompatibel ist, dass die Fingerabdruckdarstellungen in dem Satz von Klassen (FPC) mit der Darstellung des biometrischen Elements des Benutzers verglichen und abgeglichen werden können.

**12.** System nach Anspruch 11, wobei die Mittel (7) zum Auswählen angeordnet sind, die Darstellung des biometrischen Elements des Benutzers mit den Darstellungen biometrischer Elemente in dem Satz von Klassen (FPC) abzugleichen.

## Revendications

**1.** Procédé pour contrôler l'accès à un système sécurisé (8), le procédé comprenant les étapes :

- de prévision d'un ensemble de catégories d'éléments biométriques (FPC), chaque catégorie étant liée à un code de sécurité (PW) ;
- d'entrée d'un élément biométrique (FP) d'un utilisateur ;
- de déduction d'un code de sécurité sur la base d'une comparaison de l'élément biométrique (FP) de l'utilisateur et de l'ensemble de catégories d'éléments biométriques (FPC) ;

dans lequel

- le système sécurisé (8) comporte des installations d'accès sécurisées qui permettent l'entrée d'un identifiant d'utilisateur (ID) et d'un code de sécurité secret pour l'identifiant d'utilisateur (ID),
- de fourniture d'une base de données contenant l'ensemble de catégories desdits éléments biométriques (FPC), l'ensemble de catégories comprenant la gamme entière des différents éléments biométriques résultant des éléments biométriques provenant de tous les types d'utilisateurs, et
- de fourniture d'un lien vers un code de sécurité (PW) pour chaque catégorie dans l'ensemble de catégories, de sorte que le lien vers le code de sécurité lie le code de sécurité à un nombre d'utilisateurs individuels, qui sont autorisés chacun à obtenir un accès au moyen du même code de sécurité lié à la catégorie, en combinaison avec un identifiant d'utilisateur unique différent respectif, dans lequel les codes de sécurité ne sont pas propres à tous les utilisateurs,

le procédé pour contrôler l'accès comprenant en outre :

- l'entrée de l'identifiant d'utilisateur (ID) unique dans le système sécurisé (8);
- la génération et la sortie du code de sécurité (PW) par un module (3), dans lequel le module (3)
- sélectionne une catégorie dans l'ensemble de catégories (FPC) qui correspond le plus étroitement à l'élément biométrique de l'utilisateur ; et
- délivre le code de sécurité (PW) qui est lié à la catégorie sélectionnée au système sécurisé (8), de sorte que le même code de sécurité lié à la catégorie sélectionnée sera sorti pour chacun du nombre d'utilisateurs individuels dans la catégorie sélectionnée.

**2.** Procédé selon la revendication 1, dans lequel chaque code de sécurité (PW) est un code généré au préalable, lié à une seule de l'ensemble de catégories.

8

3. Procédé selon la revendication 1, comprenant en outre la conversion de l'élément biométrique de l'utilisateur en une représentation d'élément biométrique d'un utilisateur.

4. Procédé selon la revendication 2, dans lequel les éléments biométriques sont des empreintes digitales, et l'ensemble de catégories (FPC) comprend des représentations d'empreinte digitale ayant un format qui est compatible avec un format de la représentation d'élément biométrique de l'utilisateur en ce que les représentations d'empreinte digitale dans l'ensemble de catégories (FPC) peuvent être comparées et mises en correspondance avec la représentation d'élément biométrique de l'utilisateur.

5. Procédé selon la revendication 4, comprenant en outre la mise en correspondance de la représentation d'élément biométrique de l'utilisateur avec les représentations d'empreinte digitale dans l'ensemble de catégories (FPC).

6. Procédé selon la revendication 1, dans lequel l'ensemble de catégories (FPC) est généré en

a. constituant un ensemble initial de catégories ;
b. obtenant un nombre d'ensembles d'échantillons de représentations, comprenant chacun des représentations d'éléments biométriques provenant d'un ensemble d'échantillons d'éléments biométriques, chaque représentation représentant un élément biométrique, et chaque ensemble d'échantillons de représentations comprenant des représentations uniques des éléments biométriques respectifs ;
c. sélectionnant pour chaque ensemble d'échantillons de représentations, pour chaque représentation de cet ensemble, une catégorie dans ledit ensemble de catégories, laquelle catégorie correspondant le plus étroitement à cette représentation;
d. calculant une valeur d'évaluation sur la base du nombre de fois que des représentations correspondantes dans différents ensembles d'échantillons de représentations, mais représentant le même élément biométrique, conduisent à différentes sélections de catégorie ;
e. renouvelant ledit ensemble initial de catégories une ou plusieurs fois, une valeur d'évaluation étant attribuée à celui-ci à chaque fois conformément aux étapes précédentes ;
f. sélectionnant l'ensemble de catégories ayant la valeur d'évaluation la plus faible en tant qu'ensemble de catégories.

7. Procédé selon la revendication 6, dans lequel ledit renouvellement de l'ensemble de catégories est accompli par l'adaptation de l'ensemble précédent de catégories au niveau des points où des représentations d'empreinte digitale correspondantes conduisent à différents résultats de mise en correspondance.

8. Système pour contrôler l'accès à un système sécurisé (8), le système pour contrôler l'accès comprenant :

- des moyens de mémorisation comprenant un ensemble de catégories d'éléments biométriques (FPC) et de codes de sécurité (PW) ;
- des moyens (2) pour enregistrer un élément biométrique (FP) d'un utilisateur,
- des moyens (7) pour déduire un code de sécurité (PW) sur la base de l'élément biométrique de l'utilisateur et de l'ensemble mémorisé de catégories d'éléments biométriques, et

dans lequel le système sécurisé (8) comporte des installations d'accès sécurisées qui permettent l'entrée d'un identifiant d'utilisateur (ID) et d'un code de sécurité secret pour l'identifiant d'utilisateur (ID), lesdits moyens de mémorisation comprennent une base de données contenant l'ensemble de catégories de représentations d'éléments biométriques, l'ensemble de catégories comprenant la gamme entière des différents éléments biométriques résultant des éléments biométriques provenant de tous les types d'utilisateurs, chaque catégorie dans l'ensemble étant liée à un code de sécurité, dans lequel les codes de sécurité ne sont pas propres à tous les utilisateurs, de sorte que le lien vers le code de sécurité lie le code de sécurité à un nombre d'utilisateurs individuels, qui sont autorisés chacun à obtenir un accès au moyen du même code de sécurité lié à la catégorie, en combinaison avec un identifiant d'utilisateur unique différent respectif, le système pour contrôler l'accès comprenant en outre :

- des moyens (9) pour entrer un identifiant d'utilisateur (ID) unique dans le système sécurisé (8),
- lesdits moyens pour déduire le code de sécurité (PW) étant configurés pour sélectionner, dans l'ensemble de catégories d'éléments biométriques (FPC) dans les moyens de mémorisation (5), une catégorie d'éléments biométriques qui correspond le plus étroitement à l'élément biométrique de l'utilisateur enregistré, et
- des moyens (5, 6, 7, 4) pour délivrer le code de sécurité qui est lié par la base de données à la catégorie sélectionnée au système sécurisé (8), de sorte que le même code de sécurité lié à la catégorie sélectionnée sera sorti pour chacun du nombre d'utilisateurs individuels dans la catégorie sélectionnée.

9. Système selon la revendication 8, dans lequel chaque code de sécurité (PW) est un code généré au préalable, lié à une catégorie unique.

10. Système selon l'une quelconque des revendications 8 et 9, dans lequel des moyens (2) pour enregistrer l'élément biométrique (FP) de l'utilisateur sont agencés pour convertir l'élément biométrique de l'utilisateur en une représentation d'élément biométrique d'un utilisateur.

11. Système selon la revendication 10, dans lequel les éléments biométriques sont des empreintes digitales, l'ensemble de catégories (FPC) comprend des représentations d'empreinte digitale ayant un format qui est compatible avec un format de la représentation d'élément biométrique de l'utilisateur en ce que les représentations d'empreinte digitale dans l'ensemble de catégories (FPC) peuvent être comparées et mises en correspondance avec la représentation d'élément biométrique de l'utilisateur.

12. Système selon la revendication 11, dans lequel les moyens (7) pour sélectionner sont agencés pour mettre en correspondance la représentation d'élément biométrique de l'utilisateur avec les représentations d'éléments biométriques dans l'ensemble de catégories (FPC).

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0014716 A

- WO 0022581 A

**Non-patent literature cited in the description**

- **DAVID H. CHANG.** Fingerprint Recognition Through Circular Sampling. Center for Imaging Science Rochester Institute of Technology Rochester, 1999